# EUROPEAN PATENT SPECIFICATION

(11) **EP 2 569 177 B1**
(45) Date of publication and mention of the grant of the patent: **09.06.2021**
(21) Application number: 11718969.6
(22) Date of filing: 22.04.2011
(51) Int. Cl.: B60H 1/32, F17C 7/04

(54) **REFRIGERATION VEHICLE AND METHOD FOR COOLING ITS REFRIGERATION SPACE USING A LOW-TEMPERATURE-LIQUEFIED COMBUSTIBLE GAS**
KÜHLFAHRZEUG UND VERFAHREN ZUR KÜHLUNG SEINES KÄLTERAUMS MIT EINEM KÄLTEVERFLÜSSIGTEN BRENNGAS
VÉHICULE RÉFRIGÉRÉ ET PROCÉDÉ DE REFROIDISSEMENT DE SON ESPACE DE RÉFRIGÉRATION À L'AIDE D'UN GAZ COMBUSTIBLE LIQUÉFIÉ À BASSE TEMPÉRATURE

(30) Priority: 14.05.2010 DE 102010020476
(43) Date of publication of application: 20.03.2013
(73) Proprietor: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: LÜRKEN, Franz, 47906 Kempen (DE); HENRICH, Helmut, 50259 Pulheim (DE)
(74) Representative: Air Liquide
(86) International application number: PCT/EP2011/056490
(87) International publication number: WO 2011/141287

(56) References cited:
- EP-A2- 0 788 908
- DE-A1- 2 438 195
- GB-A- 2 275 098
- US-A- 3 640 337

## Description

The present invention relates to a refrigeration vehicle with at least one refrigeration space.

The document US-3 640 337 illustrates the domain of the air conditioning of the internal space of passenger vehicles. The document GB-2 275 098 illustrates the domain of the refrigeration systems for cooling the internal space of refrigeration vehicles for the transportation of goods.

It is known to operate internal combustion engines of motor vehicles with natural gas. The natural gas is carried, either under pressure or in low temperature liquefied form, in special storage tanks in the motor vehicle. In refrigeration vehicles operated with low-temperature liquefied natural gas, which have a refrigeration space for the transport of refrigerated stock, it is known from EP 0 788 908 A2 to utilize the evaporation energy of the natural gas to keep the refrigeration space at a low temperature or to at least support the cooling. Therefore the low-temperature liquefied natural gas is commonly conducted to an evaporator of a refrigeration unit for evaporation, which is connected to the refrigeration space for transmitting the cold. The gaseous natural gas is subsequently supplied to an internal combustion engine designed for natural gas. At times when the vehicle is not being operated, but the refrigeration space has to be kept cold, the refrigeration space is cooled conventionally, in which case the conventional cooling engine may, in turn, be driven by natural gas. Among other things it is disadvantageous that the natural gas itself needs to be conducted all the way from a natural gas tank mostly close to the combustion engine to the cooling unit, usually arranged in or close to the refrigeration space, which implies risks according to the flammable properties of the natural gas in case of defects like leakages in the supplying fuel lines. Moreover, especially the use of such a cooling method in a trailer truck is only applicable quite limited, because no appropriate, workable systems for disconnecting fuel lines, which would be necessary in case of decoupling a trailer from a tractor, are available. Therefore the refrigeration space of a trailer in a trailer truck usually is cooled by liquid nitrogen or by conventional compressor cooling methods solely, even if the tractor is driven by natural gas.

Another aspect that has to be taken into account is that the natural gas is carried, either under pressure or in low temperature liquefied form, in special storage tanks in the motor vehicle. In the latter case, the liquid natural gas has a temperature of at most -161°C at atmospheric pressure, and part of the natural gas may constantly evaporate on account of the heat supplied by the surroundings. Evaporation is undesirable, especially when the motor vehicle is not in operation. The gaseous part of the natural gas mainly contains the more volatile constituents of the gas which have a higher vapour pressure or a lower boiling temperature. The extraction of part of the natural gas present in gaseous form in the storage tank leads, in the long term, to an enrichment of higher hydrocarbons, in particular propane, in the low temperature liquefied part of the natural gas. The high propane gas fraction may be harmful for an internal combustion engines, when later supplied to it. Moreover, the mixture composition changes with time, this being undesirable. In an extreme case, the higher hydrocarbons may also freeze out of the solution.

The object of the present invention, therefore, is to at least partially solve the problems known from the prior art and, in particular, to specify a refrigeration vehicle , which make it possible to cool a refrigeration space of a trailer truck powered by a low-temperature liquefied combustible gas by utilizing the cold of the stored gas. Moreover a device which makes it possible to store combustible gases at low temperature, without evaporating fractions of these being discharged into the atmosphere is specified. Thus, in particular, low temperature liquefied combustible natural gas is to be used for cooling and simultaneously stored and transported more efficiently.

These objects are achieved by means of a refrigeration vehicle with the features of claim 1. Further advantageous embodiments of the invention are specified in the dependent claims. It should be pointed out that the features listed individually in the claims and the description may be combined with one another in any technologically expedient way and define further embodiments of the invention. Furthermore, the features specified in the claims are more precisely detailed and explained in the description, and further details and preferred embodiments of the invention being are illustrated in the drawing.

A Refrigeration vehicle according to the present invention comprises at least one refrigeration space, which can be cooled via at least one supplemental heat exchanger, wherein the supplemental heat exchanger in the refrigeration space is connected to other components establishing a heat exchange loop being able to exchange heat with an evaporator for low-temperature liquefied combustible gas. The heat extracted from the refrigeration space via the supplemental heat exchanger is conducted to the evaporator for evaporating the low-temperature liquefied combustible gas, especially liquefied natural gas. Preferably the supplemental heat exchanger is connected to the other components of the heat exchange loop via couplings and flexible lines.

A supplemental heat exchange loop is in particular advantageous for safety reasons. In the prior art it is known to conduct a fluid combustible gas through an evaporator located in the refrigeration space for extracting its heat. This method is practicable and efficient, but bears risks in case of a leakage, as combustible gas then possibly enters the refrigeration space. An evaporator outside the refrigeration space connected to a heat exchange loop, which transports the heat from the refrigeration space to the evaporator, can completely avoid the risk that combustible gas enters the refrigeration space in case of any leakage or other failure of the system. Moreover it even allows a more flexible local arrangement of the evaporator and shorter fuel supply lines.

In a preferred embodiment of the invention the refrigeration vehicle comprises at least one first vehicle part, which comprises a motor tractor, and one second vehicle part. The vehicle parts can be divided in that the flexible lines and the couplings form two detachable connections between the two vehicle parts. The evaporator for the low-temperature liquefied combustible gas is arranged on the first vehicle part. It is especially preferred that the second vehicle part comprises a refrigeration space and a corresponding supplemental heat exchanger. The second vehicle part may in particular be a semi-trailer generating a trailer truck in combination with the first vehicle part being a motor tractor. Moreover it is preferred, that the first vehicle part comprises a fuel tank for low-temperature liquefied combustible gas, in particular natural gas, and an internal combustion engine, which can be operated with combustible gas. The low-temperature liquefied combustible gas is conducted to an evaporator for evaporation, which is connected via fuel lines to the internal combustion engine on the one hand and to the fuel tank on the other hand. Afterwards the low-temperature liquefied combustible gas is supplied to the internal combustion engine via a fuel pump and fuel. The heat required for the evaporation is hereby extracted from the refrigeration space via the heat exchange loop.

Combustion engines being operated with natural gas as fuel are already available and used in trailer trucks. Commonly the gas is stored in the gaseous phase, which is, even if stored under pressure, disadvantageous according to the amount of fuel that can be carried and therefore the operating distance of the vehicle is limited. Thus, the operating distance can be improved by transporting the gas in the liquid phase. Such motor tractors are available in the market. However, commonly the energy inserted for the liquefication of the combustible gas is basically wasted, as long the cold included within the fluid combustible gas for storage is unemployed lost: The boiling temperature of natural gas under atmospheric pressure is -161 °C and it needs to be stored in special cryogenic tanks below this temperature, providing a significant, potentially exploitable amount of cold. Because before being supplied to the internal combustion engine of the vehicle, the fluid combustible gas needs to be evaporated and warmed in an evaporator for being suitable for combustion. This cold might be used for cooling a refrigeration space by operating an evaporator located in the refrigeration space. Additionally to the safety problems, related to evaporating the natural gas inside the refrigeration space, as described above, which can be avoided by a supplemental heat exchange loop according to the present invention, this arrangement can only be used in a refrigeration vehicle, wherein the refrigeration space, the evaporator and the internal combustion engine are all located at the same vehicle part without the possibility of separation. If there is the need for an increase in loading space and a supplementary trailer is attached to the vehicle, the trailer has to comprise its own, additional cooling system, as long as no safe couplings for fluid combustible gas are available. Therefore the refrigeration vehicle according to the invention creates the possibility for constructing a refrigeration vehicle, wherein the energy for evaporating the combustible gas is extracted from a refrigeration space and the mentioned techniques for operating a refrigeration vehicle can be combined, while their intrinsic disadvantages are avoided. The ability of the supplemental heat exchange loop to be dividable into two parts as mentioned via the couplings in the flexible lines is hence in particular important for long way transportation of chilled and frozen goods. In this case usually trailer trucks are used for the distribution, wherein the refrigeration space is located on the trailer and the evaporator is installed on the truck. It has to be pointed out, that the invention of course is not only suitable for long way transportation; also in the local distribution of goods such trailer trucks are commonly used.

The combustible gas can thus be employed both for cooling a refrigeration space and for operating an internal combustion engine. When the internal combustion engine is in operation, the low-temperature liquefied gas is first employed, during phase transformation, for cooling the refrigeration space, before it is supplied to the internal combustion engine.

In another preferred embodiment of the invention the heat exchange loop comprises a first heat exchanger, which is arranged in the refrigeration vehicle in such a way, that the first heat exchanger is able to exchange heat with the evaporator and that the first heat exchanger is connected to the supplemental heat exchanger in the refrigeration space via the flexible lines. The heat, which is extracted from the refrigeration space via the supplemental heat exchanger, is transmitted to a coolant in the heat exchange loop before being conducted to the first heat exchanger, using a coolant pump for transporting the coolant, and being transmitted to the evaporator via the first heat exchanger. The coolant is used as heat transfer medium, which preferably still remains flowable even at temperatures of liquid combustible gas and has a boiling point of markedly above 50°C. The lowest temperature at which the coolant is still to be usable is determined by the lowest temperature within the heat exchange loop to prevent freezing of the coolant and therefore avoid blockage of the loop. The heat transfer medium used as coolant is mostly commercially available oils and the like. The circulation of the coolant is ensured by operating a coolant pump.

Moreover it is especially preferred, that the coolant pump is directly operated by the internal combustion engine via a mechanic pump drive, for example a vee-belt. This way of operating the coolant pump is in particular very energy and cost effective, as a direct, mechanic connection between the combustion engine of the vehicle and the pump is very solid, long-living, requires low maintenance efforts and energy losses are notably reduced in comparison with a pump being operated by an electric motor. Another advantage of the direct mechanic connection between the pump and the engine is, that this ensures a working coolant pump when it is required, thus at times when the internal combustion engine is in operation, because then evaporation of the low-temperature liquefied combustible gas and therefore a heat transfer from the refrigeration space to the evaporator is necessary. Moreover no supplemental components like an electric motor, its energy supply and the corresponding periphery elements need to be installed on the vehicle.

In another preferred embodiment of the invention a closable air flap for supplying the evaporator with additional ambient air for evaporating the low-temperature liquefied combustible gas is installed on the refrigeration vehicle. Once the set temperature in the refrigeration space is reached, there might not be a sufficient supply of heat to the evaporator via the heat exchange loop to ensure adequate evaporation of the low-temperature liquefied gas before it is supplied to the internal combustion engine, which might lead to damages in the combustion engine. In this case the required heat can be supplied through a closable air flap, conducting ambient, warm air to the evaporator. In an advanced embodiment of the refrigeration vehicle, the closable air flap might be located close to the internal combustion engine, using its rejected heat for warming up the air which is afterwards conducted to the evaporator for increasing effectiveness of the evaporation process, as the evaporation becomes more effective if the temperature gradient between the liquefied gas and the supplied heat is enhanced. Moreover the air flap can be opened to deliver heat from the internal combustion engine to the first heat exchanger if the refrigeration space has to be heated. This case might occur in winter, when the ambient temperature is lower than the required set temperature in the refrigeration space. For example, if transportation of chilled food requiring a temperature above 0°C is carried out and the ambient temperature is below this value. Commonly a regulation unit being connected to the mentioned elements of the heat exchange loop and to corresponding sensors will be installed on the vehicle for controlling the different modes of operation and to ensure a sufficient supply of heat or cold to the refrigeration space and a sufficient amount of heat to the evaporator to avoid applying fluid combustible gas to the internal combustion engine.

In another preferred embodiment of the invention the refrigeration vehicle comprises in addition a bypass connection and a bypass valve being arranged such that the supplemental heat exchanger is bypassed by opening the bypass valve, when the refrigeration space does not require any cooling because its set temperature is reached. The bypass valve is also opened, if the two vehicle parts are disconnected and thus the corresponding couplings between the vehicle parts are detached. For supporting effectiveness of the bypass connection it is preferred to close a switching valve simultaneously, which is mounted in a row to the first heat exchanger such that the first heat exchanger is, in case of a closed switching valve and an opened bypass valve, still passed through with circulating coolant for not freezing. The heat required for the evaporation of the low-temperature liquefied combustible gas in the evaporator is in this case supplied by air being conducted through the closeable air flap. In particular, freezing of the first heat exchanger, which might occur if not enough coldness is taken for being conducted to the refrigeration space, is avoided, because it is warmed by the air delivered by opening the air flap. Refining this embodiment a regulation unit might be installed, which opens and closes the valves with respect to the required mode of operation.

According to the invention the refrigeration vehicle moreover comprises a first nitrogen tank for liquid nitrogen, nitrogen lines, a nitrogen pump, a nitrogen outlet and a nitrogen heat exchanger arranged in a refrigeration unit together with the supplemental heat exchanger enabling indirect cooling of the refrigeration space via liquid nitrogen, in particular when the combustion engine is not operated and the refrigeration vehicle is at a standstill.

The liquid nitrogen might be used for cooling the refrigeration space, either in combination with the natural gas cooling mode or individually. Common techniques for nitrogen cooling might be practiced; in particular it is preferred to use indirect cooling methods, whereby heat is extracted via a nitrogen heat exchanger from the refrigeration space. Because the nitrogen and/or the combustible gas, depending on the current circumstances, is employed for cooling a refrigeration space, higher energy efficiency in the use of low temperature liquefied combustible gases and of liquid nitrogen is achieved. If the low temperature liquefied combustible gas has to be present in gaseous form for further use, the evaporation energy can be employed in the phase transformation from liquid to gaseous in order to cool a refrigeration space. At times when the combustible gas is not required for further use in the gaseous state, the liquid nitrogen may be employed for cooling the refrigeration space. The advantage of this is that nitrogen can be discharged harmlessly into the environment, in contrast to most combustible gases. A synergy effect is achieved by the coordinated use of both gases for cooling a refrigeration space depending on the outer circumstances. When the vehicle is in operation, the low temperature liquefied combustible gas is extracted from the fuel tank from the liquid phase, is first initially evaporated, employed for cooling the refrigeration space and is supplied only thereafter to the internal combustion engine. Thus, during operation, less or no liquid nitrogen has to be supplied to the refrigeration space, with the result that the efficiency of the refrigeration vehicle is further increased. However, a cooling of the refrigeration space by low-temperature liquefied combustible gas and liquid nitrogen is also possible, depending on the refrigeration requirements. Furthermore, the liquid nitrogen may be employed, as required, for cooling the refrigeration space, especially at times when the refrigeration vehicle is not being moved, but the refrigeration space is to be cooled. Thus, when the internal combustion engine is at a standstill, only nitrogen is employed for cooling the refrigeration space and is conducted into the atmosphere.

The combination of refrigeration techniques for nitrogen and natural gas cooling gives rise to an energy advantageous and environmentally advantageous use of low temperature liquefied combustible gas and of liquid nitrogen.

In another preferred embodiment of the invention a boil-off device is located on the refrigeration vehicle, for joint storage and/or transportation of low-temperature liquefied combustible gas and liquid nitrogen. The boil-off device comprises a fuel tank for low-temperature liquefied combustible gas, a second nitrogen tank for liquid nitrogen and a heat-transmitting connection element between the fuel tank and the second nitrogen tank, which is designed in such a way, that the combustible gas in the fuel tank can be cooled or kept cool directly or indirectly by the liquid nitrogen.

Liquid nitrogen has a boiling temperature of at most -196°C at normal pressure and can therefore cool low-temperature liquefied combustible gas in the liquid phase having a higher boiling temperature of all the constituents than -196°C. There is a theoretical possibility of cooling the low-temperature-liquefied combustible gas by directly supplying liquid and/or gaseous nitrogen to the low-temperature liquefied combustible gas and therefore cooling it. It is preferable, however, to discharge heat indirectly from the low temperature liquefied combustible gas, in that liquid and/or gaseous nitrogen or a heat transfer medium is supplied in a pipeline system to the low temperature liquefied combustible gas, so that heat transmission takes place indirectly via the pipeline system. The direct or indirect cooling prevents the low temperature liquefied combustible gas from evaporating unintentionally due to the supply of heat from the surroundings. Loss free storage of a low temperature liquefied combustible gas is thus made possible. This affords the further advantage that the low temperature liquefied combustible gas preserves its composition of different components and is not enriched with less volatile constituents which have a higher boiling point. On account of the transmission of heat from the low temperature liquefied combustible gas to the nitrogen, what can be achieved, according to the boil-off device, is that the low temperature liquefied combustible gas is constantly cooled so that the low temperature liquefied combustible gas does not evaporate due to the additional introduction of heat from the surroundings. Owing to the transmission of heat from the low temperature liquefied combustible gas to the liquid nitrogen, only the latter evaporates and is at least partially in gaseous form. The still cold gaseous nitrogen may be employed for cooling further refrigeration spaces and may subsequently be routed to the atmosphere or employed elsewhere, for example for inertization. It is perfectly safe to discharge nitrogen into the free ambient air.

From the interaction of low temperature liquefied combustible gas and liquid nitrogen, a synergy effect is achieved, and environmental pollution caused by natural gas which possibly escapes is reduced to zero. Moreover, the low temperature liquefied combustible gas is stored, free of loss, in the first storage tank, and an enrichment of the low temperature liquefied combustible gas with higher boiling constituents is avoided. In addition, using the boil-off device in the tractor is particularly advantageous, because a simultaneous, combined filling mode for liquid nitrogen and natural gas at a corresponding filling station unit becomes possible, realizing an extraordinary increase in efficiency. In addition available techniques for operating trucks with an internal combustion engine driven by a low-temperature liquefied combustible gas can be used according to elements of the present invention and be combined with common trailers employing liquid nitrogen for cooling of the refrigeration space. Intrinsic disadvantages like not to exploit the cold of the stored liquefied gas as executed in the state of art are overcome. Thus the realisation of further synergy effects becomes possible, while this cold is used for cooling a refrigeration space and in particular the use of the supplemental heat exchange loop enables a significant increase in safety, practicability and in economic as well as environmental effectiveness in the daily application of refrigeration trucks for food distribution.

The invention and the technical context are explained below, by way of example, by means of the drawing. It should be pointed out that the drawing shows an especially preferred design of the invention, which, however, is not restricted to this.

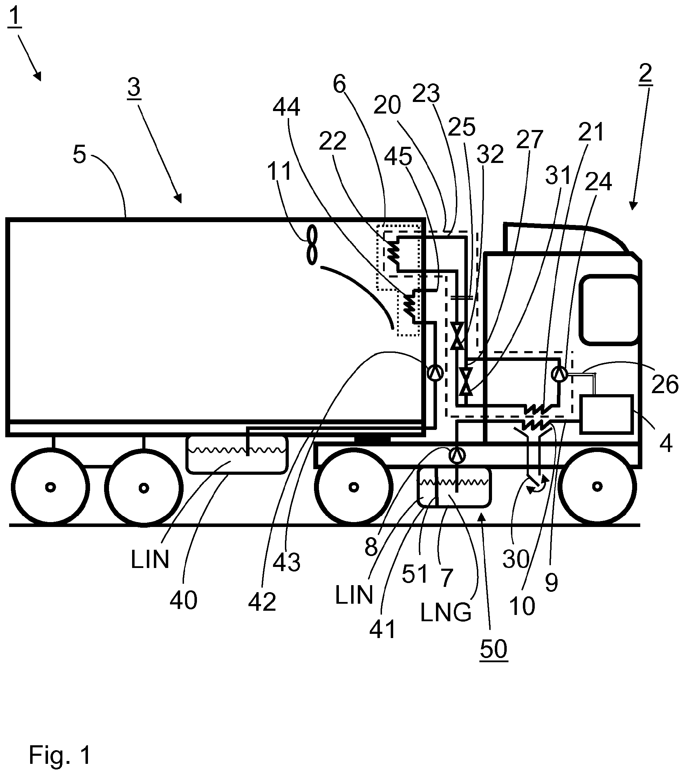

Fig 1 shows schematically an embodiment of the invention in a refrigeration trailer truck.

Figure 1 shows a refrigeration vehicle 1 comprising a first vehicle part 2, being a motor tractor, and a second vehicle part 3, being is a semi-trailer, which can be separated. The first vehicle part 2 comprises a fuel tank 7 for low-temperature liquefied combustible gas LNG, preferably natural gas. The low-temperature liquefied combustible gas LNG can be conducted via fuel lines 9 and a fuel pump 8 into an evaporator 10 for evaporating. After a phase transition in the evaporator 10 the now gaseous combustible gas can be conducted into an internal combustion engine 4, which can be operated with combustible gas. The second vehicle part 3 comprises a refrigeration space 5, which can be cooled by a refrigeration unit 6, composed of a supplemental heat exchanger 22 and a nitrogen heat exchanger 44, and a fan 11 for circulating the air in the refrigeration space 5, whereby the air is conducted through the refrigeration unit 6. The refrigeration unit 6 cools the refrigeration space 5, in that heat of the refrigeration space 5 is extracted via the supplemental heat exchanger 22 and/or the nitrogen heat exchanger 44.

The nitrogen heat exchanger 44 is an essential part of a nitrogen cooling system in the refrigeration space 5 of the second vehicle part 3 comprising an insulated nitrogen tank 40 for liquid nitrogen LIN, nitrogen lines 42, a nitrogen pump 43 and a nitrogen outlet 45. The liquid nitrogen LIN can be piped via the nitrogen pump 43 through the nitrogen lines 42 into the nitrogen heat exchanger 44 in the refrigeration space 5, in which the liquid nitrogen LIN is evaporated and the heat required for warming up the liquid nitrogen LIN and for its phase transition is taken from the refrigeration space 5, by what the desired indirect cooling power is achieved. After the evaporation the nitrogen can be emitted into the environment via the nitrogen outlet 45. Other known methods for cooling a refrigeration space with nitrogen can be used in parallel or alternatively to the one mentioned. Moreover, a simultaneous use of a conventional compressor based cooling circuit is possible.

Furthermore the refrigeration space 5 of the second vehicle part 3 can be cooled indirectly by extracting its heat with the supplemental heat exchanger 22 of the refrigeration unit 6 via a heat exchange loop 20 by leading the heat into a first heat exchanger 21, which is located in the first vehicle part 2 close to the evaporator 10 for the low-temperature liquefied combustible gas LNG, with the result that the phase transition of the combustible gas from liquid to gaseous takes place in the evaporator 10. The heat exchange loop 20, moreover, contains a coolant circulating in the heat exchange loop 20, by means of being driven by a coolant pump 24. The heat exchange loop 20 in addition comprises flexible lines 23 as well as detachable couplings 25, which enable the disconnection of the heat exchange loop 20 into two parts, if the first 2 and the second 3 vehicle part are separated, whereby for increasing safety and practicability these two parts of the heat exchange loop 20 are sealed by reconnecting the elements of the detachable couplings 25 on each vehicle part 2, 3, so that two smaller loops are generated. The detachable couplings 25 are designed in such a way, that in case of disconnecting all ends are automatically sealed simultaneously and thus no losses of coolant can occur. The coolant pump 24 is mounted on the first vehicle part 2 and is preferentially directly operated by the internal combustion engine 4 by using a mechanic pump drive 26, for example a vee-belt.

If more heat is required for evaporating the low temperature liquefied combustible gas LNG in the evaporator 10, for example if the set temperature of the refrigeration space 5 is reached, warm ambient air can be supplied to the evaporator 10 by opening a closable flap 30. The closable air flap 30 can be mounted in a way, that the ambient air imbibes rejected heat of the internal combustion engine 4 and afterwards supplies this additional heat to the evaporator 10, therefore even if the ambient air is not warm enough for supporting an efficient evaporation of the low-temperature combustible gas LNG in the evaporator 10 a sufficient amount of heat is available. Another case when this additional heat rejected from the internal combustion engine 4 might be needed is, when the refrigeration space 5 contains chilled food requiring a temperature above the temperature of the surrounding, for example in winter, when chilled food is transported not being capable of temperature below a certain set value. Commonly a regulation unit being connected to the mentioned elements of the heat exchange loop 20 and to corresponding sensors not included to the figure will be installed on the refrigeration vehicle 1 for controlling the different modes of operation and to ensure a sufficient supply of heat or cold to the refrigeration space 5 and a sufficient amount of heat to the evaporator 10 to avoid applying fluid combustible gas LNG to the internal combustion engine 4.
The line system of the heat exchange loop 20 moreover comprises a bypass-connection 27 to bypass the supplemental heat exchanger 22 and the detachable couplings 25. For the regulation of the coolant flow, a bypass valve 31 is included in the bypass connection 27, which is inserted parallel to the detachable couplings 25 and parallel to the supplemental heat exchanger 22 on the first vehicle part 2. The bypass connection 27 provides a loop only consisting of the first heat exchanger 21, the coolant pump 24 and the bypass valve 31, if the bypass valve 31 is opened and a switching valve 32, being inserted in a row with the first heat exchanger 21, is closed. The switching valve 32 is mounted in such a way, that the first heat exchanger 21 is, in case of a closed switching valve 32 and an opened bypass valve 31, still passed through with circulating coolant for not freezing. The bypass connection 27 is applied, when the refrigeration space 5 does not require any cooling because its set temperature is reached. The bypass valve 31 is also opened, if the two vehicle parts 2, 3 are disconnected and thus the corresponding couplings 25 between the vehicle parts 2, 3 are detached. The heat required for the evaporation of the low-temperature liquefied combustible gas LNG in the evaporator 10 is in case of bypassing the supplemental heat exchanger 22, hence opened bypass valve 31 and closed switching valve 32, supplied by air being conducted through the closeable air flap 30. In particular, freezing of the first heat exchanger 21, which might occur if not enough coldness is taken from the low-temperature liquefied combustible gas LNG for being conducted to the refrigeration space 5, is avoided, because it is warmed by the air delivered by opening the air flap 30.

The refrigeration room cooling, using the heat exchange loop 20 as mentioned before is preferably used when the internal combustion engine 4 of the refrigeration vehicle 1 is in use, because in this case gaseous combustible gas LNG is required in the internal combustion engine 4 and the synergistic effects of the process can be fully utilized. In case of not operating the internal combustion engine 4 or when the first 2 and the second 3 vehicle parts are separated and simultaneously a cooling of the refrigeration space 5 is necessary, the required cold can be supplied by the liquid nitrogen LIN cooling method as described. In this way an extraordinary efficient technique for distributing the available forms of energy can be realized, and therefore in particular the consumption of liquid nitrogen LIN in a refrigeration truck can be minimized. Even if the energy extracted from the refrigeration space 5 for evaporation of the low-temperature liquefied combustible gas LNG is not sufficient to reach a given set temperature in the refrigeration space 5, the liquid nitrogen cooling method can be used simultaneously. For a further reduction of nitrogen consumption, especially if cooling powers of liquid nitrogen LIN and low-temperature liquefied gas LNG are combined, the nitrogen heat exchanger 44 is arranged behind the supplemental heat exchanger 22 according to the fan 11 in the refrigeration unit 6, so that the air circulating in the refrigeration space 5 firstly flows through the supplemental heat exchanger 22.

The first vehicle part 2 is additionally equipped with a boil-off device 50, which enables a connection of the fuel tank 7 to a second nitrogen tank 41 via a heat-transmitting connection element 51. The boil-off device 50 hereby enables an exceptionally efficient joint storage and/or transport of low-temperature liquefied combustible gas LNG and liquid nitrogen LIN, because the low-temperature liquefied combustible gas LNG can be cooled directly or indirectly with the liquid nitrogen LIN in the second nitrogen tank 41. An evaporation of the low-temperature liquefied combustible gas LNG on account of the supply of heat from the surroundings is thus prevented. Moreover, the boil-off device 50 ensures that the temperature of the low-temperature liquefied combustible gas LNG in the fuel tank 7 is kept below the boiling point of all the constituents, which temperature amounts, in the case of a pressureless storage of natural gas, to -161°C. Thus, an enrichment of constituents of the low-temperature liquefied combustible gas LNG, possessing a relatively high boiling point, in the fuel tank 7 can be avoided. Following especially a potentially damaging increase of the part of propane in the low-temperature liquefied combustible gas LNG can be obviated.

The present invention is especially suitable for refrigeration transporters operated with natural gas, which are used for the distribution of frozen and chilled goods to retail dealers. In particular the economic employment of a combustion engine operated with natural gas in a transporter, storing the natural gas in the liquid phase, and the combined use of this cold for cooling a refrigeration space is highly advantageous, because the amount of energy needed all in all can be explicitly lowered. Moreover, using the boil-off device in the tractor is particularly advantageous, because a simultaneous, combined filling mode for liquid nitrogen and natural gas at a corresponding filling station unit becomes possible, realizing an extraordinary increase in efficiency.

### List of Reference Symbols

- LIN: Liquid nitrogen
- LNG: Liquid natural gas

- 1: Refrigeration vehicle
- 2: First vehicle part
- 3: Second vehicle part
- 4: Internal combustion engine
- 5: Refrigeration space
- 6: Refrigeration unit
- 7: Fuel tank
- 8: Fuel pump
- 9: Fuel lines
- 10: Evaporator
- 11: Fan
- 20: Heat exchange loop
- 21: First heat exchanger
- 22: Supplemental heat exchanger
- 23: Flexible lines
- 24: Coolant pump
- 25: Coupling
- 26: Mechanic pump drive
- 27: Bypass connection
- 30: Closable air flap
- 31: Bypass valve
- 32: Switching valve
- 40: First Nitrogen tank
- 41: Second Nitrogen tank
- 42: Nitrogen line
- 43: Nitrogen pump
- 44: Nitrogen heat exchanger
- 45: Nitrogen outlet
- 50: Boil-off-Vorrichtung
- 51: Heat-transmitting connection element

## Claims

1. **Refrigeration vehicle** (1) comprising at least one refrigeration space (5), which can be cooled via at least one supplemental heat exchanger (22), the supplemental heat exchanger (22) being located in the refrigeration space (5) and being connected to other components establishing a heat exchange loop (20) and being able to exchange heat with an evaporator (10) for low-temperature liquefied combustible gas (LNG),
wherein
- the heat exchange loop (20) comprises a first heat exchanger (21), which is arranged in the refrigeration vehicle (1) in such a way, that the first heat exchanger (21) is able to exchange heat with the evaporator (10) and that the first heat exchanger (21) is connected to the supplemental heat exchanger (22) in the refrigeration space (5); and
- the refrigeration vehicle (1) comprises a first nitrogen tank (40) for liquid nitrogen (LIN), nitrogen lines (42), a nitrogen pump (43), a nitrogen outlet (45) and a nitrogen heat exchanger (44), arranged in a refrigeration unit (6) together with the supplemental heat exchanger (22).

2. Refrigeration vehicle (1) according to claim 1, wherein the supplemental heat exchanger (22) is connected to the other components of the heat exchange loop (20) via couplings (25) and flexible lines (23).

3. Refrigeration vehicle (1) according to claim 2, wherein the refrigeration vehicle (1) comprises at least one first vehicle part (2) and one second vehicle part (3) being dividable and wherein the first vehicle part (2) comprises an internal combustion engine (4), **characterized in that** the flexible lines (23) and the couplings (25) form two detachable connections between the two vehicle parts (2, 3) and the evaporator (10) for the low-temperature liquefied combustible gas (LNG) is arranged on the first vehicle part (2).

4. Refrigeration vehicle (1) according to claim 3, wherein the first vehicle part (2) comprises a fuel tank (7) for low-temperature liquefied combustible gas (LNG), in particular natural gas, wherein the internal combustion engine (4) can be operated with combustible gas (LNG) and wherein the evaporator (10) is connected via fuel lines (9) to the internal combustion engine (4) on the one hand and to the fuel tank (7) on the other hand, so that the combustible gas (LNG) can be conducted to the internal combustion engine (4).

5. Refrigeration vehicle (1) according to one of the preceding claims, wherein the heat exchange loop (20) contains a coolant and comprises a coolant pump (24).

6. Refrigeration vehicle (1) according to one of the preceding claims, wherein a closable air flap (30) for supplying the evaporator (10) with additional ambient air for evaporating the low-temperature liquefied combustible gas (LNG) is installed on the refrigeration vehicle(1).

7. Refrigeration vehicle (1) according to one of the claims 4 to 6, wherein a bypass connection (27) and a bypass valve (31) are arranged such that the supplemental heat exchanger (22) can be bypassed by opening the bypass valve (31).

8. Refrigeration vehicle (1) according to one of the preceding claims, wherein in the refrigeration vehicle (1) a boil-off device (50) is located, for joint storage and/or transportation of low-temperature liquefied combustible gas (LNG) and liquid nitrogen (LIN), comprising a fuel tank (7) for low-temperature liquefied combustible gas (LNG), a second nitrogen tank (41) for liquid nitrogen (LIN) and a heat-transmitting connection element (51) between the fuel tank (7) and the second nitrogen tank (41), which is designed in such a way, that the combustible gas (LNG) in the fuel tank (7) can be cooled or kept cool directly or indirectly by the liquid nitrogen (LIN).

## Patentansprüche

1. Kühlfahrzeug (1), umfassend zumindest einen Kälteraum (5), der über zumindest einen zusätzlichen Wärmetauscher (22) gekühlt werden kann, wobei der zusätzliche Wärmetauscher (22) im Kälteraum (5) befindlich ist und mit anderen Komponenten verbunden ist, eine Wärmetauscherschleife (20) bildend und in der Lage, Wärme mit einem Verdampfer (10) für kälteverflüssigtes Brenngas (LNG) zu tauschen, wobei
- die Wärmetauscherschleife (20) einen ersten Wärmetauscher (21) umfasst, der im Kühlfahrzeug (1) in einer Weise angeordnet ist, dass der erste Wärmetauscher (21) in der Lage ist, Wärme mit dem Verdampfer (10) auszutauschen, und dass der erste Wärmetauscher (21) mit dem zusätzlichen Wärmetauscher (22) im Kälteraum (5) verbunden ist; und
- das Kühlfahrzeug (1) einen ersten Stickstofftank (40) für flüssigen Stickstoff (LIN), Stickstoffleitungen (42), eine Stickstoffpumpe (43), einen Stickstoffauslass (45) und einen Stickstoffwärmetauscher (44) umfasst, angeordnet in einer Kälteeinheit (6) zusammen mit dem zusätzlichen Wärmetauscher (22).

2. Kühlfahrzeug (1) nach Anspruch 1, wobei der zusätzliche Wärmetauscher (22) über Kopplungen (25) und flexible Leitungen (23) mit den anderen Komponenten der Wärmetauscherschleife (20) verbunden ist.

3. Kühlfahrzeug (1) nach Anspruch 2, wobei das Kühlfahrzeug (1) zumindest einen ersten Fahrzeugteil (2) und einen zweiten Fahrzeugteil (3) umfasst, die teilbar sind, und wobei der der erste Fahrzeugteil (2) eine interne Brennkraftmaschine (4) umfasst, **dadurch gekennzeichnet, dass** die flexiblen Leitungen (23) und die Kopplungen (25) zwei abnehmbare Verbindungen zwischen den zwei Fahrzeugteilen (2, 3) bilden und dass der Verdampfer (10) für das kälteverflüssigte Brenngas (LNG) am ersten Fahrzeugteil (2) angeordnet ist.

4. Kühlfahrzeug (1) nach Anspruch 3, wobei der erste Fahrzeugteil (2) einen Kraftstofftank (7) für kälteverflüssigtes Brenngas (LNG), insbesondere Erdgas, umfasst, wobei die interne Brennkraftmaschine (4) mit Brenngas (LNG) betrieben werden kann und wobei der Verdampfer (10) über Kraftstoffleitungen (9) mit der internen Brennkraftmaschine (4) auf der einen Seite und mit dem Kraftstofftank (7) auf der anderen Seite verbunden ist, sodass das Brenngas (LNG) zur internen Brennkraftmaschine (4) geleitet werden kann.

5. Kühlfahrzeug (1) nach einem der vorhergehenden Ansprüche, wobei die Wärmetauscherschleife (20) ein Kältemittel enthält und eine Kältemittelpumpe (24) umfasst.

6. Kühlfahrzeug (1) nach einem der vorhergehenden Ansprüche, wobei eine schließbare Luftklappe (30) zum Versorgen des Verdampfers (10) mit zusätzlicher Umgebungsluft zum Verdampfen des kälteverflüssigten Brenngases (LNG) am Kühlfahrzeug (1) installiert ist.

7. Kühlfahrzeug (1) nach einem der Ansprüche 4 bis 6, wobei eine Umgehungsverbindung (27) und ein Umgehungsventil (31) so angeordnet sind, dass der zusätzliche Wärmetauscher (22) durch Öffnen des Umgehungsventils (31) umgangen werden kann.

8. Kühlfahrzeug (1) nach einem der vorhergehenden Ansprüche, wobei im Kühlfahrzeug (1) eine Abdampfvorrichtung (50) befindlich ist, für gemeinsame Speicherung und/oder Transport von kälteverflüssigtem Brenngas (LNG) und flüssigem Stickstoff (LIN), umfassend einen Kraftstofftank (7) für kälteverflüssigtes Brenngas (LNG), einen zweiten Stickstofftank (41) für flüssigen Stickstoff (LIN) und ein wärmeübertragendes Verbindungselement (51) zwischen dem Kraftstofftank (7) und dem zweiten Stickstofftank (41), das in einer Weise konzipiert ist, dass das Brenngas (LNG) im Kraftstofftank (7) durch den flüssigen Stickstoff (LIN) direkt oder indirekt gekühlt oder kühl gehalten werden kann.

## Revendications

1. Véhicule de réfrigération (1) comprenant au moins un espace de réfrigération (5), qui peut être refroidi par le biais d'au moins un échangeur de chaleur supplémentaire (22), l'échangeur de chaleur supplémentaire (22) étant situé dans l'espace de réfrigération (5) et étant relié à d'autres composants établissant une boucle d'échange de chaleur (20) et pouvant échanger de la chaleur avec un évaporateur (10) pour du gaz combustible liquéfié à basse température (LNG),
dans lequel
- la boucle d'échange de chaleur (20) comprend un premier échangeur de chaleur (21), qui est disposé dans le véhicule de réfrigération (1) de telle sorte que le premier échangeur de chaleur (21) peut échanger de la chaleur avec l'évaporateur (10) et que le premier échangeur de chaleur (21) est relié à l'échangeur de chaleur supplémentaire (22) dans l'espace de réfrigération (5) ; et
- le véhicule de réfrigération (1) comprend un premier réservoir d'azote (40) pour de l'azote liquide (LIN), des conduites d'azote (42), une pompe à azote (43), une sortie d'azote (45) et un échangeur de chaleur à l'azote (44), disposés dans une unité de réfrigération (6) conjointement avec l'échangeur de chaleur supplémentaire (22) .

2. Véhicule de réfrigération (1) selon la revendication 1, dans lequel l'échangeur de chaleur supplémentaire (22) est relié aux autres composants de la boucle d'échange de chaleur (20) par le biais de raccords (25) et de conduites souples (23).

3. Véhicule de réfrigération (1) selon la revendication 2, le véhicule de réfrigération (1) comprenant au moins une première partie de véhicule (2) et une deuxième partie de véhicule (3) qui sont divisibles, et dans lequel la première partie de véhicule (2) comprend un moteur à combustion interne (4), **caractérisé en ce que** les conduites souples (23) et les raccords (25) forment deux jonctions détachables entre les deux parties de véhicule (2, 3), et l'évaporateur (10) pour le gaz combustible liquéfié à basse température (LNG) est disposé sur la première partie de véhicule (2).

4. Véhicule de réfrigération (1) selon la revendication 3, dans lequel la première partie de véhicule (2) comprend un réservoir de combustible (7) pour du gaz combustible liquéfié à basse température (LNG), en particulier du gaz naturel, dans lequel le moteur à combustion interne (4) peut fonctionner avec du gaz combustible (LNG) et dans lequel l'évaporateur (10) est relié par le biais de conduites de combustible (9) au moteur à combustion interne (4) d'une part et au réservoir de combustible (7) d'autre part, de telle sorte que le gaz combustible (LNG) peut être acheminé jusqu'au moteur à combustion interne (4).

5. Véhicule de réfrigération (1) selon une des revendications précédentes, dans lequel la boucle d'échange de chaleur (20) contient un fluide caloporteur et comprend une pompe à fluide caloporteur (24).

6. Véhicule de réfrigération (1) selon une des revendications précédentes, un clapet d'air fermable (30) destiné à fournir à l'évaporateur (10) de l'air ambiant supplémentaire pour évaporer le gaz combustible liquéfié à basse température (LNG) étant installé sur le véhicule de réfrigération (1).

7. Véhicule de réfrigération (1) selon une des revendications 4 à 6, dans lequel une jonction de dérivation (27) et une vanne de dérivation (31) sont disposées de telle sorte que l'échangeur de chaleur supplémentaire (22) peut être contourné par ouverture de la vanne de dérivation (31).

8. Véhicule de réfrigération (1) selon une des revendications précédentes, un dispositif d'évaporation (50) étant situé dans le véhicule de réfrigération (1) pour le stockage et/ou le transport combinés de gaz combustible liquéfié à basse température (LNG) et d'azote liquide (LIN), comprenant un réservoir de combustible (7) pour du gaz combustible liquéfié à basse température (LNG), un deuxième réservoir d'azote (41) pour de l'azote liquide (LIN) et un élément de jonction transmettant la chaleur (51) entre le réservoir de combustible (7) et le deuxième réservoir d'azote (41), qui est conçu de telle sorte que le gaz combustible (LNG) dans le réservoir de combustible (7) peut être refroidi ou maintenu froid directement ou indirectement par l'azote liquide (LIN).
